# EUROPÄISCHE PATENTSCHRIFT

(11) **EP 3 504 718 B1**
(45) Veröffentlichungstag und Bekanntmachung des Hinweises auf die Patenterteilung: **07.05.2025**
(21) Anmeldenummer: 17746070.6
(22) Anmeldetag: 27.07.2017
(51) Int. Cl.: H01B 3/00, H01B 3/30

(54) **ISOLATIONSELEMENT MIT CHEMIEFASERN ZUR ELEKTRISCHEN ISOLATION IM HOCHSPANNUNGSBEREICH**
INSULATION ELEMENT WITH CHEMICAL FIBRES FOR ELECTRICAL INSULATION IN THE HIGH VOLTAGE RANGE
ÉLÉMENT D'ISOLATION ÉLECTRIQUE AVEC FIBRES CHIMIQUES POUR UNE ZONE HAUTE TENSION

(30) Priorität: 23.08.2016 EP 16185233
(43) Veröffentlichungstag der Anmeldung: 03.07.2019
(73) Patentinhaber: Weidmann Holding AG, 8640 Rapperswil (CH)
(72) Erfinder: EXNER, Wolfgang, 90559 Burgtham (DE); JAUFER, Stefan, 8630 Rüti (CH); WOLFINGER, Tobias, 8730 Uznach (CH)
(74) Vertreter: Rutz, Andrea
(86) Internationale Anmeldenummer: PCT/EP2017/068998
(87) Internationale Veröffentlichungsnummer: WO 2018/036747

(56) Entgegenhaltungen:
- WO-A1-2011/003635
- WO-A1-2014/154478
- WO-A1-2016/131698
- DE-A1- 102010 052 889

## Beschreibung

### TECHNISCHES GEBIET

Die vorliegende Erfindung betrifft ein Isolationselement mit geringer elektrischer Leitfähigkeit zur elektrischen Isolation eines elektrotechnischen Bauelements im Hochspannungsbereich. Die Erfindung betrifft ausserdem ein elektrotechnisches Bauelement mit einem derartigen Isolationselement sowie ein Verfahren zur Herstellung eines solchen Isolationselements.

### STAND DER TECHNIK

Isolationselemente stellen einen wichtigen Bestandteil von elektrotechnischen Bauelementen und insbesondere Transformatoren dar. Die Isolationselemente dienen dazu, zwei elektrische Leiter, welche sich im Betrieb des Bauelements, auf unterschiedlichen Spannungspotentialen befinden, elektrisch gegeneinander zu isolieren. Im Isolationselement selbst kann sich dadurch ein elektromagnetisches Feld etablieren. Bei der Isolation von Transformatorwicklungen kommen oft Isolationselemente zum Einsatz, die mit Transformatorenöl imprägniert sind, um dadurch eine effiziente Kühlung der Wicklungen zu erzielen.

Aus verschiedenen Gründen ist es bei vielen Anwendungen und insbesondere bei HVDC-Stromrichtertransformatoren erwünscht, dass die Isolationselemente nicht vollständig isolierend wirken, sondern eine genau einstellbare, geringfügige Leitfähigkeit aufweisen. Die Leitfähigkeit des Isolationselements kann beispielsweise an diejenige des Transformatorenöls angepasst werden, um dadurch die Durchschlagfestigkeit der Transformatorisolation insgesamt zu verbessern. Indem das Isolationselement sogar eine höhere Leitfähigkeit als das Transformatorenöl aufweist, kann das elektrische Feld mehr in das Isolieröl gedrängt und somit zu hohe, lokale Feldstärken im Isolationselement verhindert werden. Die Feststoffisolation wird dadurch entlastet bzw. kann kleiner dimensioniert werden. Eine kleinere Dimensionierung, d.h. geringere Dicke, des Isolationselements bedeutet einerseits weniger Materialverbrauch und somit geringere Kosten bei der Herstellung des Isolationselements. Andererseits beansprucht das Isolationselement dadurch aber auch weniger Volumen im elektrotechnischen Bauelement, wodurch dieses ebenfalls kleiner dimensioniert und kostengünstiger hergestellt werden kann. Je nach Typ und Anwendung des elektrotechnischen Bauelements sind in Bezug auf die darin verwendeten Isolationselemente also gewisse Leitfähigkeiten durchaus erstrebenswert.

Um möglichst konstante Bedingungen beim Betrieb des elektrotechnischen Bauelements zu haben, also beispielsweise auch während der Inbetriebnahme eines Transformators, sollten die elektrischen Eigenschaften des Isolationselements so weit wie möglich temperaturunabhängig sein. Die elektrische Leitfähigkeit der meisten üblichen Isolationselemente ist jedoch stark temperaturabhängig.

Das Dokument WO 2008/119705 A1 offenbart ein Isolationselement mit einer Matrix aus einem Polymermaterial. Um eine gewisse elektrische Leitfähigkeit zu erreichen, sind im Polymermaterial elektrisch leitfähige Partikel eingelagert.

Insbesondere bei Transformatoren kommen häufig Isolationselemente zum Einsatz, welche einen natürlichen Faserstoff, wie zum Beispiel Cellulose, und/oder Chemiefasern, wie zum Beispiel Aramidfasern, enthalten. Natürliche, aus Zellstoff bestehende Faserstoffe, haben ausgezeichnete dielektrische Eigenschaften und weisen eine ausreichende Durchschlagsfestigkeit auf. Ausserdem zeichnen sich aus Zellstoff hergestellte Isolationselemente durch ihre gute Imprägnierbarkeit mit Transformatorenöl aus. Chemiefasern zeichnen sich hingegen insbesondere bei längerem Gebrauch meist durch eine bessere Temperaturbeständigkeit aus.

Ein auf Cellulose basierendes Material, bei welchem mittels Einlagerung von leitfähigen Partikeln eine gewisse Leitfähigkeit erreicht wird, ist in der EP 0 953 680 A1 offenbart. Das gemäss dem in diesem Dokument hergestellte Material weist jedoch mit wenigstens 2.0 mS/cm eine für die Isolation von vielen elektrotechnischen Bauelementen und insbesondere für die Transformatorenisolation weitaus zu hohe Leitfähigkeit auf.

In der DE 29 34 007 wird ein Papier- oder Pappeerzeugnis mit einem darin eingebauten metallischen Füllstoff offenbart. Für viele elektrotechnische Anwendungen ist die elektrische Leitfähigkeit des in diesem Dokument angegebenen Papier- oder Pappeerzeugnisses daher zu stark ausgeprägt.

Die DE 10 2010 041 630 A1 offenbart eine auf Cellulosematerial basierende Transformatorisolation, deren spezifischer Widerstand mit Hilfe von halbleitenden oder nichtleitenden Nanopartikeln an den Widerstand des Öls angepasst wird. Die im Cellulosematerial verteilten Nanopartikel sind dazu mit einem elektrisch leitfähigen Polymer beschichtet. Die Herstellung eines Isolationselements gemäss der Lehre dieses Dokuments gestaltet sich aber schwierig und ist mit verhältnismässig hohen Kosten verbunden, da die Nanopartikel bei der notwendigerweise durchzuführenden Entwässerung des Cellulosematerials zu einem grossen Teil ausgeschwemmt werden und es dadurch zu einem erheblichen Partikelverlust kommt. Zudem weist das Isolationselement eine ungleichmässige elektrische Leitfähigkeit auf.

Die WO 2012/003166 offenbart ein mehrlagiges Isolationselement mit zwei Schichten, welche jeweils Aramidfasern beinhalten, sowie mit einer dazwischen angeordneten Schicht aus Cellulose.

Die WO 2016/131698 A1 derselben Anmelderin offenbart ein Isolationselement für den Hochspannungsbereich, bei welchem elektrisch leitfähige Partikel in einem natürlichen und chemisch nicht weiter verarbeiteten Faserstoff, wie zum Beispiel Cellulose, eingelagert sind, um eine genau einstellbare Leitfähigkeit des Isolationselements zu erreichen. Die Partikel weisen hierzu einen elektrisch nichtleitenden Kern sowie eine den Kern umgebende, elektrisch leitfähige oder halbleitfähige Umhüllung auf. Indem das Isolationselement zudem ein kationisches Polymer aufweist, kann eine besonders homogene Verteilung der Leitfähigkeit erzielt werden.

Die WO 2014/154478 A1 offenbart ein Cellulosematerial mit einer geringen elektrischen Leitfähigkeit, was mittels einer Imprägnierung aus Polyethylenimin erreicht wird.

### DARSTELLUNG DER ERFINDUNG

Es ist also eine Aufgabe der vorliegenden Erfindung, für die elektrische Isolation eines elektrotechnischen Bauelements im Hochspannungsbereich ein kostengünstig herstellbares Isolationselement zur Verfügung zu stellen, welches eine genau einstellbare, geringe und homogen verteilte elektrische Leitfähigkeit aufweist.

Zur Lösung dieser Aufgabe wird ein Isolationselement vorgeschlagen, wie es in Anspruch 1 angegeben ist. Ausserdem wird in Anspruch 13 ein elektrotechnisches Bauelement mit einem derartigen Isolationselement sowie in Anspruch 15 ein Verfahren zur Herstellung eines derartigen Isolationselements angegeben. Bevorzugte Ausführungsformen sind in den abhängigen Ansprüchen angegeben.

Die vorliegende Erfindung stellt also ein Isolationselement mit geringer elektrischer Leitfähigkeit zur elektrischen Isolation eines elektrotechnischen Bauelements im Hochspannungsbereich zur Verfügung, aufweisend Chemiefasern umfassend aus synthetischen Polymeren hergestellte Chemiefasern oder anorganische Chemiefasern sowie elektrisch leitfähige Partikel mit einem elektrisch nichtleitenden Kern und einer den Kern umgebenden, elektrisch leitfähigen oder halbleitfähigen Umhüllung. Das Isolationselement weist ausserdem ein kationisches Polymer auf.

Das kationische Polymer ermöglicht eine innerhalb des Isolationselementes homogen verteilte geringe elektrische Leitfähigkeit, insbesondere eine homogen verteilte geringe elektrische Leitfähigkeit über die Dicke des Isolationselementes, zu erzielen. Bevorzugt sind hierzu die elektrisch leitfähigen Partikel und/oder das kationische Polymer homogen im Isolationselement verteilt. Bevorzugt ist die homogene Verteilung über die Dicke des Isolationselementes und vorteilhaft über das gesamte Isolationselement gegeben.

Bevorzugt wird das Isolationselement zur elektrischen Isolation im Hochspannungsbereich verwendet. Es kann aber auch zur Isolation bei Spannungen unterhalb des Hochspannungsbereichs verwendet werden. Zum Hochspannungsbereich werden üblicherweise Wechselspannungen mit einem Effektivwert von zumindest 1000 Volt sowie Gleichspannungen von zumindest 1500 Volt gezählt. Bevorzugt ist das Isolationselement sogar derart ausgebildet, dass es bei beliebigen Spannungen von wenigstens 100 kV, und insbesondere bevorzugt von wenigstens 350 kV, elektrisch isolierend wirkt.

Vorteilhaft ist das Isolationselement mit Öl, insbesondere Transformatorenöl, imprägniert. Insbesondere vorteilhaft sind dabei die Chmiefasern mit Öl, insbesondere Transformatorenöl, imprägniert. Das Isolationselement weist dann also Öl, insbesondere Transformatorenöl, auf und ist dadurch unmittelbar für eine entsprechende elektrotechnische Anwendung verwendbar. Für viele elektrotechnische Anwendungen und insbesondere für den Einsatz in Transformatoren und im Speziellen in HVDC-Stromrichtertransformatoren weist das mit Öl, insbesondere Transformatorenöl, imprägnierte Isolationselement bevorzugt eine elektrische Leitfähigkeit von wenigstens 1*10⁻¹⁷ S/m, bevorzugter von wenigstens 1*10⁻¹⁵ S/m, noch bevorzugter von wenigstens 1*10⁻¹³ S/m, noch bevorzugter von wenigstens 1*10⁻¹⁰ S/m, am bevorzugtesten von wenigstens 1*10⁻⁹ S/m, auf. Bevorzugt beträgt die maximale elektrische Leitfähigkeit 1*10⁻⁷ S/m, bevorzugter 1*10⁻⁸ S/m. Die elektrische Leitfähigkeit in Öl wird gemäss der Norm IEC 60093, 2. Ausgabe, 1.1.1980 gemessen. Die Auswertung der Messung erfolgt nach dem sog. Kuechler-Verfahren (A. Kuechler; Hochspannungstechnik Grundlagen - Technologie - Anwendungen; 3te Auflage, 2009, ISBN 978-3-540-78412-8; Kapitel 4.2.2.3). Durch die Verwendung der elektrisch leitfähigen Partikel mit einem elektrisch nichtleitenden Kern und einer den Kern umgebenden, elektrisch leitfähigen oder halbleitfähigen Umhüllung ist die elektrische Leitfähigkeit des Isolationselements genau und insbesondere auf diese vorteilhaften Werte einstellbar.

Das Isolationselement kann eine oder mehrere Lagen aufweisen, welche jeweils die Chemiefasern sowie die elektrisch leitfähigen Partikel und das kationisches Polymer aufweisen. Die einzelnen Lagen sind dabei vorteilhaft miteinander verbunden. Falls das Isolationselement wenigstens zwei Lagen aufweist, so sind die elektrisch leitfähigen Partikel und / oder das kationische Polymer bevorzugt in wenigstens einer Lage, bevorzugter in jeder Lage, homogen verteilt. Bevorzugt ist die homogene Verteilung über die Dicke wenigstens einer Lage, bevorzugter über die Dicke jeder Lage, gegeben.

Bevorzugt wird bei der Herstellung des Isolationselements so viel kationisches Polymer verwendet, dass das kationische Polymer bezogen auf das Gesamtgewicht des Isolationselements im Trockenzustand 0.1 - 15 Gew.-%, bevorzugter 1 - 15 Gew.-%, noch bevorzugter 2 - 15 Gew.-%, noch bevorzugter 3 - 15 Gew.-%, am bevorzugtesten 4 - 15 Gew.-% ausmacht. Es resultiert eine besonders gute Herstellbarkeit des Isolierelementes bei der Verwendung der genannten Mengen an kationischem Polymer.

Im Rahmen dieser Erfindung ist in Bezug auf das Isolationselement unter dem Ausdruck "im Trockenzustand" zu verstehen, dass das Isolationselement 1 Gew.-% oder weniger Wasser aufweist bezogen auf das Gesamtgewicht des Isolationselementes. Die Messung des Wassergehaltes wird mittels der Norm IEC 60814, 2. Ausgabe, 29.8.1997 durchgeführt. Für die Wassermessung wird ein Probenofen Metrohm 774 kombiniert mit einem 831 KF Coulometer verwendet.

Bevorzugt machen die elektrisch leitfähigen Partikel 1 - 30 Gew.-%, bevorzugter 4 - 30 Gew.-%, noch bevorzugter 6 - 30 Gew.-%, noch bevorzugter 8 - 30 Gew.-%, noch bevorzugter 11 - 30 Gew.-%, noch bevorzugter 12 - 30 Gew.-%, noch bevorzugter 12 - 28 Gew.-%, noch bevorzugter 12 - 26 Gew.-%, am bevorzugtesten 18 - 26 Gew.-%, des Gesamtgewichts des Isolationselements im Trockenzustand aus. Diese Partikelmengen erlauben eine definierte Einstellung der elektrischen Leitfähigkeit in Öl insbesondere in den Bereichen von 1*10⁻¹⁷ S/m bis 1*10⁻⁸ S/m, 1*10⁻¹⁶ S/m bis 1*10⁻⁸ S/m, 1*10⁻¹⁵ S/m bis 1*10⁻⁸ S/m, 1*10⁻¹³ S/m bis 1*10⁻⁸ S/m, 1*10⁻¹⁰ S/m bis 1*10⁻⁸ S/m sowie 1*10⁻⁹ S/m bis 1*10⁻⁸ S/m, welche insbesondere bei Transformatorenanwendungen wichtig sind. Bei wenigstens 11 Gew.-%, insbesondere bei wenigstens 12 Gew.-% an elektrisch leitfähigen Partikeln sind für die elektrische Leitfähigkeit hauptsächlich die elektrisch leitfähigen Partikel und nicht mehr die Chemiefasern massgebend, was mit dem Perkolationseffekt der Partikel erklärbar ist. Die elektrische Leitfähigkeit des Isolationselements kann dann mit Hilfe einer entsprechenden Partikelwahl genau eingestellt werden und ist im Wesentlichen unabhängig von der Partikelkonzentration. Ab dieser Partikeldosierung ist die elektrische Leitfähigkeit des Isolationselements zudem weitgehend temperaturunabhängig. Wenn die Partikelkonzentration in einem Bereich von 11 - 30 Gew.-%, bevorzugt in einem Bereich von 12 - 30 Gew.-%, bevorzugter in einem Bereich von 12 - 28 Gew.-%, noch bevorzugter in einem Bereich von 12 - 26 Gew.-%, am bevorzugtesten in einem Bereich von 18 - 26 Gew.-%, bezogen auf das Gesamtgewicht des Isolationselement im Trockenzustand liegt, kann eine klar definierte, von der Partikelkonzentration und der Temperatur weitgehend unabhängige elektrische Leitfähigkeit des Isolationselements bei einem minimalen Partikelaufwand erreicht werden. Wenn die Partikelkonzentration in einem Bereich von 11 - 30 Gew.-%, bevorzugt in einem Bereich von 12 - 30 Gew.-%, bevorzugter in einem Bereich von 12 - 28 Gew.-%, noch bevorzugter in einem Bereich von 12 - 26 Gew.-%, am bevorzugtesten in einem Bereich von 18 - 26 Gew.-%, bezogen auf das Gesamtgewicht des Isolationselementes im Trockenzustand liegt sowie das kationische Polymer bezogen auf das Gesamtgewicht des Isolationselements im Trockenzustand in einem Bereich von 2 - 5 Gew.-%, bevorzugt in einem Bereich von 2 - 4 Gew.-%, noch bevorzugter in einem Bereich von 3 - 4 Gew.-%, liegt, kann besonders gut eine klar definierte, von der Partikelkonzentration und der Temperatur weitgehend unabhängige elektrische Leitfähigkeit des Isolationselements bei einem minimalen Partikelaufwand erreicht werden. Da die Partikel üblicherweise einen besonders kostspieligen Bestandteil des Isolationselements darstellen, können auf diese Weise die Gesamtkosten des Isolationselements vermindert werden.

Ein optimaler Perkolationseffekt kann beobachtet werden, wenn die elektrisch leitfähigen Partikel plättchenförmig sind. Die notwendige Menge an elektrisch leitfähigen Partikeln im Isolationselement kann mittels einer plättchenförmigen Ausgestaltung der Partikel also gesenkt werden.

Der Begriff ,Chemiefasern' stellt einen Sammelbegriff für Fasern dar, die industriell hergestellt werden, insbesondere die industriell mit chemischen Verfahren hergestellt werden. Chemiefasern umfassen Fasern hergestellt aus natürlichen Polymeren, Fasern hergestellt aus synthetischen Polymeren sowie anorganische Chemiefasern. Die Fasern hergestellt aus natürlichen Polymeren sind beispielsweise Polylactidfasern. Die Fasern hergestellt aus natürlichen Polymeren können beispielsweise auch auf Cellulosebasis sein und sind dann beispielsweise Regeneratfasern oder Celluloseesterfasern. Regeneratfasern sind beispielsweise Viskose, Modal, Lyocell oder Cupro. Celluloseesterfasern sind beispielsweise Celluloseacetatfasern oder Cellulosetriacetatfasern. Fasern hergestellt aus synthetischen Polymeren werden in der Regel aus Erdöl oder Kohle gewonnen. Chemiefasern hergestellt aus synthetischen Polymeren sind beispielsweise Polyamidfasern, Polyesterfasern, Polyurethanfasern, Polyvinylfasern, Polyolefinfasern, Fluorofasern, Polyethersulfonfasern, Polyacrylnitrilfasern, Melaminharzfasern oder Aramidfasern. Polyolefinfasern sind zum Beispiel Polyethylenfasern oder Polypropylenfasern. Aramidfasern sind beispielsweise Meta-Aramidfasern oder Para-Aramidfasern. Anorganische Chemiefasern sind beispielsweise Glasfasern oder Keramikfasern,

Vorteilhaft machen die Chemiefasern wenigstens 10 Gew.-%, vorteilhafter wenigstens 20 Gew.-%, vorteilhafter wenigstens 40 Gew.-%, vorteilhafter wenigstens wenigstens 60 Gew.-%, vorteilhafter wenigstens 80 Gew.-%, am vorteilhaftesten 90 Gew.-% bezogen auf das Gesamtgewicht des Isolationselements im Trockenzustand aus. Das Isolationselement ist dadurch kostengünstig herstellbar und gut mit Transformatorenöl imprägnierbar. Ein hoher Anteil an Chemiefasern, insbesondere an synthetischen Fasern wie beispielsweise Aramidfasern, führt zu einer besseren Temperaturbeständigkeit des Isolationselements, insbesondere bei längerem Gebrauch. Die Betriebsdauer des Isolationselements kann dadurch erhöht werden.

Die elektrisch leitfähige oder halbleitfähige Umhüllung umgibt den Kern der Partikel vorteilhaft jeweils vollständig. Sie basiert vorteilhaft auf einem anorganischen Material. Bevorzugt enthält die Umhüllung der elektrisch leitfähigen Partikel ein Metall, bevorzugter ein Metalloxid. Partikel umfassend eine Metall enthaltende, insbesondere eine ein Metalloxid enthaltende, Umhüllung erlauben eine besser definierbare Einstellung der elektrischen Leitfähigkeit im Isolationselement. Zudem ist ein solches Partikel einfacher herstellbar sowie beständiger. Beim Metalloxid kann es sich beispielsweise um Zinnoxid, Zinkoxid, Antimonoxid, Titandioxid, Zirkoniumdioxid, Indiumdioxid. Siliziumdioxid oder beispielsweise um einen Mischung einzelner der genannten Metalloxide handeln. Bevorzugt ist das Metalloxid mit einem Fremdatom dotiert. Mittels einer geeigneten Wahl und Dosierung des Fremdatoms kann die Leitfähigkeit des Isolationselements genau an einen gewünschten Wert angepasst werden. Als Dotierungsatome kommen zum Beispiel Gallium, Aluminium, Indium, Thallium, Germanium, Zinn, Phosphor, Arsen, Antimon, Selen, Tellur und/oder Fluor in Frage.

Die Grösse der elektrisch leitfähigen Partikel liegt vorteilhaft bei höchstens 200 µm (Mikrometer), vorteilhafter bei höchstens 100 µm, und noch vorteilhafter bei höchstens 60 µm. Bevorzugt liegt die Partikelgrösse zudem bei mindestens 2 µm. Es hat sich gezeigt, dass mit Partikeln in diesen Grössenbereichen in Kombination mit dem kationischen Polymer die elektrische Leitfähigkeit besonders genau einstellbar ist. Bevorzugt liegt die Dicke der elektrisch leitfähigen Partikel, insbesondere falls die elektrisch leitfähigen Partikel plättchenförmige Partikel sind, im Bereich von 0.3 bis 4 µm, insbesondere im Bereich von 0.5 bis 3 µm.

Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA2000 (Produkt der Fa. Malvern Instruments Ltd., UK) eingesetzt. Dieses Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

Beim Kern der elektrisch leitfähigen Partikel handelt es sich vorteilhaft um ein mineralisches Material. Bevorzugt weist der Kern einen natürlichen oder synthetischen Glimmer auf. Der Kern kann aber auch Kalziumkarbonat, Kreide, Talkum, Bentonit, Kaolin, Glas, Titandioxid, Siliziumdioxid (SiO₂), Sericit oder Aluminiumoxid (Al₂O₃) aufweisen. Elektrisch leitfähige Partikel umfassend Glimmer weisen eine höhere Beständigkeit auf und können besser beschichtet werden.

In einer insbesondere bevorzugten Ausführungsform handelt es sich bei den elektrisch leitfähigen Partikeln um das Produkt der Firma Merck, Darmstadt mit dem Handelsnamen Minatec^{®} 51 CM und/oder das Produkt der Firma Merck, Darmstadt mit dem Handelsnamen Minatec^{®} 31 CM. Beim elektrisch leitfähigen Partikel kann es sich auch um die Produkte der Firma Merck, Darmstadt mit dem Handelsnamen Minatec^{®} 40 CM, Minatec^{®} 60 CM oder Minatec^{®} 42 CM handeln.

Als kationisches Polymer wird bevorzugt Polyethylenimin (PEI) und/oder kationische Stärke verwendet. Es kann sich beim kationischen Polymer aber auch um Polyacrylamid (PAM), Polydiallyldimethylammoniumchlorid (PDADMAC), Polyvinylalkohol, Polyesterepoxyharz, Polyvinylamin (PVAm), Polyethylenoxid (PEO), Dicyandiamidformaldehyd (DCD), Polyamidoamin (PAMAM), Polyaminoamidepichlorohydrin (PAE) oder Polyamidepoxyharz handeln.

Im Rahmen dieser Erfindung ist in Bezug auf die Chemiefasern unter dem Ausdruck "im Trockenzustand" zu verstehen, dass die Chemiefasern 1 Gew.-% oder weniger Wasser aufweisen bezogen auf das Gesamtgewicht der Chemiefasern, also des Faserstoffs. Die Messung des Wassergehaltes wird mittels der Norm ISO 4119, 2. Ausgabe, 1.6.1995 durchgeführt.

Das Isolationselement kann neben den Chemiefasern zudem auch eine beliebige Anzahl weiterer Materialien enthalten. So können neben den Chemiefasern im Isolationselement beispielsweise auch Nichtfaserstoffe wie Polyesterharz, Amylose, Amylopektin, Stärke, Algin, Pektin, Carrageenan, Johannisbrotkernmehl, Xanthan, Guaran, Agar, Furcellaran, Carboxymethylcellulose (CMC) und/oder Tamarindenextrakt enthalten sein. Selbstverständlich kann neben den Chemiefasern zudem auch ein natürlicher Faserstoff, welcher aus Holz und/oder Einjahrespflanzen, insbesondere Baumwolle, gewonnen wird, im Isolationselement enthalten sein. Beim natürlichen Faserstoff kann es sich um Zellstoff, insbesondere um Cellulose, handeln. Alternativ oder zusätzlich kann der natürliche Faserstoff aber auch auf Abaca, Jute, Hanf, Sisal und/oder Altpapier basieren.

Bevorzugt liegt das Isolationselement in Form von Papier, Karton oder Pappe vor.

Die Erfindung betrifft ausserdem ein elektrotechnisches Bauelement für den Hochspannungsbereich mit einem Isolationselement, welches wie ausgeführt ausgebildet ist. Beim elektrotechnischen Bauelement kann es sich insbesondere um einen Transformator, wie einen HVDC-Stromrichtertransformator, handeln.

Die vorliegende Erfindung gibt zudem ein Verfahren zur Herstellung eines Isolationselements, welches wie ausgeführt ausgebildet ist. Das Verfahren weist zumindest die Verfahrensschritte auf:
- Vermischen der Chemiefasern mit elektrisch leitfähigen Partikeln, die einen elektrisch nichtleitenden Kern sowie eine den Kern umgebende, elektrisch leitfähige oder halbleitfähige Umhüllung aufweisen; und
- Entwässern der mit den elektrisch leitfähigen Partikeln vermischten Chemiefasern.

Das Verfahren weist ausserdem den Verfahrensschritt auf, dass den Chemiefasern vor dem Entwässern ein kationisches Polymer beigemischt wird. Das Beimischen des kationischen Polymers kann vor, nach oder mit dem Vermischen der Chemiefasern mit den elektrisch leitfähigen Partikeln durchgeführt werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Querschnittsansicht eines ersten erfindungsgemässen Isolationselements, mit einer verhältnismässig geringen Dosierung an elektrisch leitfähigen Partikeln;
- Fig. 2: eine schematische Querschnittsansicht eines zweiten erfindungsgemässen Isolationselements, mit einer im Vergleich zur Fig. 1 erhöhten Dosierung an elektrisch leitfähigen Partikeln;
- Fig. 3 a, b, c: schematische Querschnittsansichten von elektrisch leitfähigen Partikeln; sowie
- Fig. 4: eine Graphik, welche den Zusammenhang zwischen der elektrischen Leitfähigkeit eines erfindungsgemässen Isolationselementes und dessen Gehalt an elektrisch leitfähigen Partikeln zeigt.

### BESCHREIBUNG BEVORZUGTER AUSFÜHRUNGSFORMEN

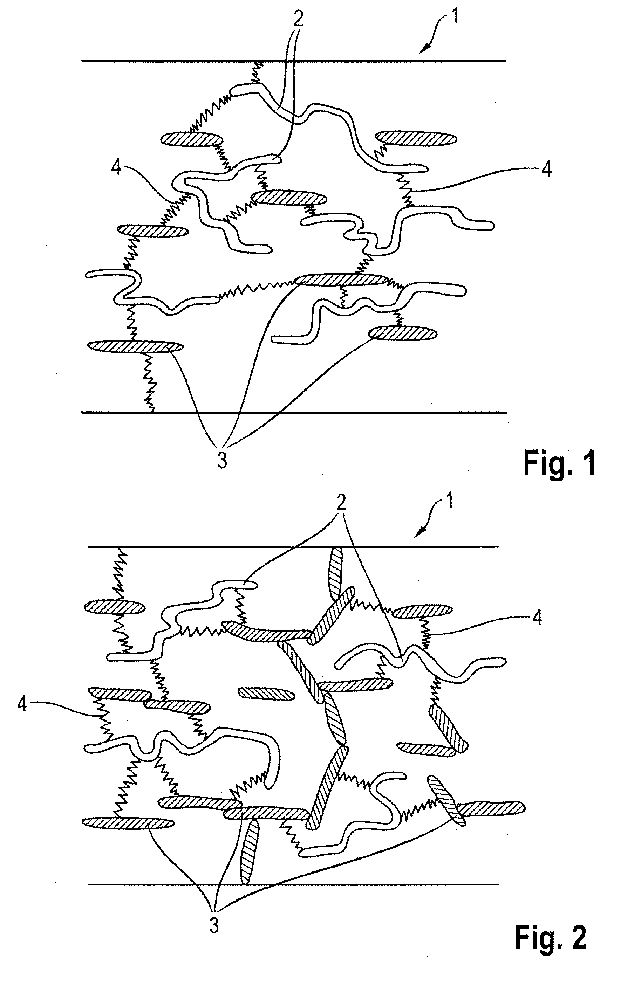

Nachfolgend wird ein Verfahren zum Herstellen eines bevorzugten Ausführungsbeispiels eines erfindungsgemässen Isolationselements 1 zur elektrischen Isolation eines elektrotechnischen Bauelements im Hochspannungsbereich angegeben. In den Figuren 1 und 2 sind schematische Querschnittsansichten gezeigt von derartigen Isolationselementen 1, mit jeweils einer unterschiedlichen Dosierung an elektrisch leitfähigen Partikeln 3.

Für die Herstellung des erfindungsgemässen Isolationselements 1 dieses Ausführungsbeispiels werden Chemiefasern 2 eingesetzt. Als Chemiefasern können beispielsweise Para-Aramidfasem, wie beispielsweise Twaron^{®} 1094 der Firma Teijin (Kasinostraße 19-21, 42103 Wuppertal, Deutschland) eingesetzt werden. Die Chemiefasern 2 können gemahlen werden, so dass sie für die weitere Verarbeitung in einer gemahlenen Form vorliegen. Sie weisen einen Entwässerungswiderstand von 5 SR (Schopper-Riegler) bis 80 SR auf. Die mittlere längengewichtete Faserlänge des Ausgangmaterials, also der Chemiefasern 2, liegt bevorzugt in einem Bereich zwischen 0.3 mm und 6.0 mm, bevorzugter jedoch in einem Bereich zwischen 0.3 mm und 2.2 mm. Der Entwässerungswiderstand wird gemäss der Norm ISO 5267-1, 2. Ausgabe, 1.3.1999 bestimmt. Die Faserlänge wird gemäss der Norm TAPPI T271, pm-91, 1991, bestimmt.

Die gemahlenen Chemiefasern 2 werden in Wasser suspendiert. Den im Wasser suspendierten Chemiefasern 2 wird ein Additiv in Form eines kationischen Polymers 4, wie zum Beispiel eine kationische Stärke, ein kationisches Polyethylenimin, kationisches Polyacrylamid, kationisches Polydiallyldimethylammoniumchlorid (PolyDADMAC) oder ein kationischer Polyvinylalkohol beigemischt. Die Dosierung des Additivs sollte vornehmlich bei einer Stoffdichte von 0.01 bis 10 Gew.-%, besser bei 0.1-10 Gew.-%, jedoch am besten bei 0.5 bis 1.0 Gew.-% stattfinden. Das kationische Polymer 4 ermöglicht es, eine homogen verteilte geringe elektrische Leitfähigkeit innerhalb des Isolationselements 1 zu erzielen.

Im bevorzugten Ausführungsbeispiel wird eine kationische Stärke (ROQUETTE FRERES, 62080 LESTREM, Frankreich, VECTOR^{®} SC 20157) in einer Menge verwendet, welche einem Anteil von mindestens 0.2 %, bevorzugter von mindestens 0.5 Gew.-%, noch bevorzugter von mindestens 1.0 % Trockensubstanz bezogen auf das Gesamtgewicht des Isolationselements 1 im Trockenzustand entspricht. Bevorzugt wird die kationische Stärke in einer Menge verwendet, welche einem maximalen Anteil von 8 Gew.-%, bevorzugter einem maximalen Anteil von 10 Gew.-%, noch bevorzugter einem maximalen Anteil von 15 Gew.-%, Trockensubstanz bezogen auf das Gesamtgewicht des Isolationselements 1 im Trockenzustand entspricht.

Im weiteren Verlauf des Herstellungsprozesses werden der Suspension aus Chemiefasern 2 und kationischem Polymer elektrisch leitfähige Partikel 3 mit einem elektrisch nichtleitenden Kern und einer den Kern umgebenden, elektrisch leitfähigen oder halbleitfähigen Umhüllung hinzugegeben. Beim elektrisch nichtleitenden Kern dieser Partikel 3 handelt es sich um einen mineralischen Füllstoff, wie zum Beispiel Kalziumkarbonat, Kreide, Talkum, Bentonit, Kaolin, Titandioxid oder, was insbesondere bevorzugt ist, Glimmer. Die leitfähige oder halbleitfähige Umhüllungsschicht weist bevorzugt ein Oxid aus Zinn, Zink, Indium, Titan, Zirkonium, Silizium und/oder Antimon auf. Die Umhüllungsschicht macht bevorzugt 20 - 60 Gew.-% der Gesamtmasse eines einzelnen leitfähigen Partikels 3 aus. Der mineralische Füllstoff des Partikels 3 hat dementsprechend einen Gewichtsanteil von 40 - 80 Gew.-% bezogen auf die Gesamtmasse des leitfähigen Partikels 3.

Die Grösse der leitfähigen Partikel 3 liegt bei 2 - 200 µm, bevorzugt aber bei 100 µm oder weniger, bevorzugter sogar bei 60 µm oder weniger, jedoch vorteilhaft bei wenigstens 2 µm. Der mineralische Füllstoff selbst weist dabei bevorzugt einen Aschegehalt von 99.5 % auf. Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA2000 (Produkt der Fa. Malvern Instruments Ltd., UK) eingesetzt. Dieses Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

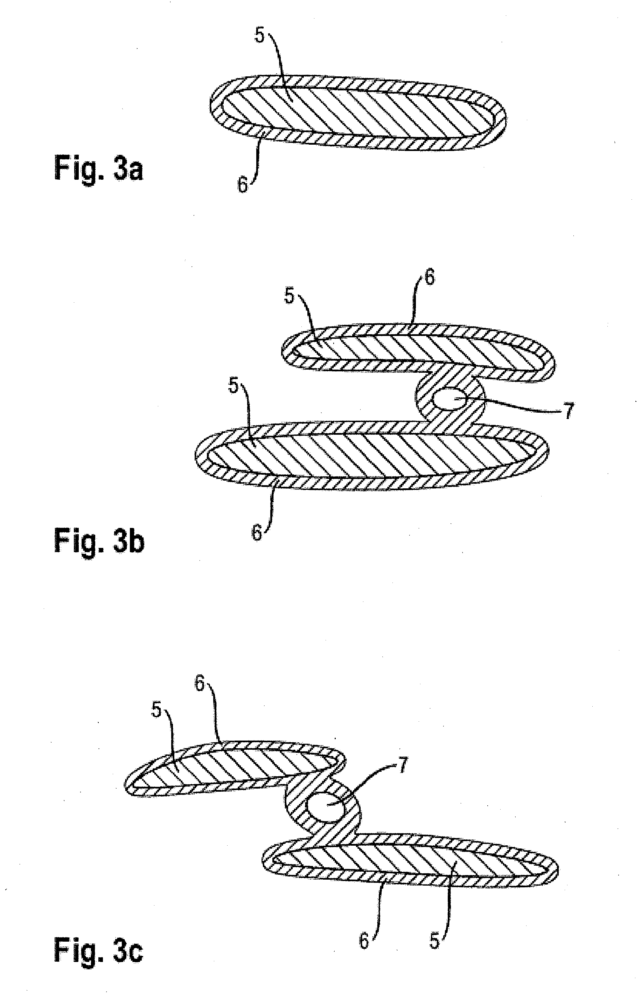

Im bevorzugten Ausführungsbeispiel werden die leitfähigen Partikel 3 durch das Produkt Minatec^{®} 31 CM (Figur 3a) oder Minatec^{®} 51 CM (Figur 3a) der Firma Merck, Darmstadt gebildet. Im Falle von Minatec^{®} 31 CM weisen die leitfähigen Partikel 3 eine Partikelgrösse im Bereich von 2 µm bis 15 µm auf. Im Falle von Minatec^{®} 51 CM weisen die leitfähigen Partikel 3 eine Partikelgrösse im Bereich von 10 µm bis 60 µm auf. Der Anteil der aus Antimonoxid bestehenden Umhüllungschicht 6 beträgt bei Minatec^{®} 31 CM 38 - 54 Gew.-%, und bei Minatec^{®} 51 CM 21 - 36 Gew.-% und derjenige des nichtleitenden, aus Glimmer bestehenden Kerns 5 somit bei Minatec^{®} 31 CM 46 -62 Gew.-% und bei Minatec^{®} 51 CM 64 - 79 Gew.-%.

Alternativ oder zusätzlich ist die Verwendung von leitfähigen Partikeln 3 möglich, die jeweils zwei Glimmerpartikel aufweisen, welche eine leitfähige Schicht, insbesondere Umhüllungsschicht 6, aufweisen und zusätzlich über ein Quarz- oder Talkumpartikel 7 miteinander verbunden sind. Die leitfähige Schicht 6 dieser Partikel 3 weist im Idealfall ein Oxid aus Antimon auf. Die elektrisch leitfähigen Partikel der Produkte der Firma Merck, Darmstadt mit den Handelsnamen Minatec^{®} 40 CM (Figur 3b), Minatec^{®} 60 CM (Figur 3b) weisen einen Quartzpartikel 7 auf. Die elektrisch leitfähigen Partikel des Produktes der Firma Merck, Darmstadt mit dem Handelsnamen Minatec^{®} 42 CM (Figur 3c) enthalten einen Talkumpartikel 7.

In einem weiteren Herstellungsschritt werden die in Wasser suspendierten und mit dem kationischen Polymer 4 sowie den elektrisch leitfähigen Partikeln 3 vermischten Chemiefasern 2 mit Hilfe eines Siebes entwässert. In einem anschliessenden Pressvorgang wird das noch in den Chemiefasern 2 zurückgebliebene Wasser ausgeschieden.

Durch die Entwässerung der Suspension, dessen Feststoffanteil einen Anteil von 60 - 94 % der Chemiefasern 2 aufweist, einen Anteil von 1.0 - 4.0 % des kationischen Polymers 4 und einen Anteil von 5.0 - 39.0 % der elektrisch leitenden Partikel 3 aufweist, wird ein einlagiges Gefüge gebildet. Das Isolationselement 1 wird schliesslich bevorzugt aus weniger als 10, bevorzugter aus weniger als 8, und am bevorzugtesten aus einer bis sieben dieser einzelnen Lagen gebildet. Diese Lagen können durch das Aufwickeln auf einer Formatwalze bis zu einer Dicke, welche sich auf den nassen Zustand bei einem Wassergehalt von 50 - 90 % bezieht, von 50 mm zu einem dicken Karton oder Pappe gebildet werden.

Während des Entwässerungsvorgangs wird das Fasermaterial nicht nur mittels Druck entwässert, sondern auch mittels thermischer Erwärmung auf 50 bis 160 °C.

Nach der Entwässerung liegt das mit einem kationischen Polymer 4 und mit leitfähigen Partikeln 3 vermischte Fasermaterial 2 in Form von Papier, Karton oder Pappe vor und hat bevorzugt ein Flächengewicht von 10 g/m² - 12'000 g/m². Der Karton weist bevorzugt ein Flächengewicht von 225 bis kleiner als 600 g/m² auf. Die Pappe weist bevorzugt ein Flächengewicht von 600 - 12'000 g/m² auf. Das Papier weist bevorzugt ein Flächengewicht von kleiner als 225 g/m² auf.

In einem weiteren Herstellungsschritt kann das flächige, entwässerte Fasermaterial 2 mit einem Klebstoff verklebt werden, um dadurch eine Dicke von bis zu 500 mm zu erreichen. Der Klebstoff kann zum Beispiel auf einem Polyesterharz, einem Casein oder einer mikro- oder nanoskaligen Cellulose basieren. Ebenfalls ist es möglich, das mit elektrisch leitfähigen Partikeln 3 und dem kationischen Polymer 4 vermischte Fasermaterial 2 beim Pressvorgang in eine beliebige dreidimensional strukturierte Form zu überführen und im Anschluss an diesen Formprozess thermisch zu trocknen.

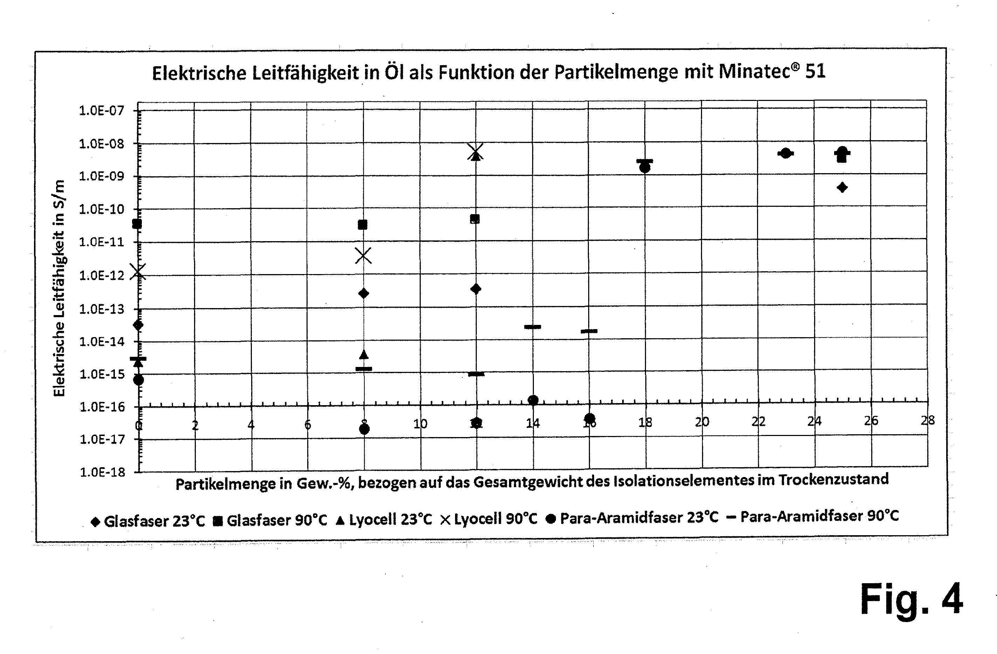

Die Menge an elektrisch leitfähigen Partikeln 3 wird derart gewählt, dass im entwässerten Isolationselement 1 ein Gehalt von 1 - 30 Gew.-%, bevorzugt 4 - 30 Gew.-%, bevorzugter 6 - 30 Gew.-%, noch bevorzugter 8 - 30 Gew.-%, noch bevorzugter 11 - 30 Gew.-%, noch bevorzugter 12 - 30 Gew.-%, noch bevorzugter 12 - 28 Gew.-%, noch bevorzugter 12 - 26 Gew.-%, am bevorzugtesten 18 - 26 Gew.-%, des Gesamtgewichts des Isolationselements im Trockenzustand vorhanden ist. Die obere Menge an elektrisch leitfähigen Partikeln 3 liegt bei den genannten Bereichen nicht bei 30 Gew.-%, sondern bevorzugt bei 28 Gew.-%, bevorzugter bei 26 Gew.-%. Diese Partikelmengen erlauben eine definierte Einstellung der elektrischen Leitfähigkeit in Öl insbesondere in den Bereichen von 1*10⁻¹⁷ S/m bis 1*10⁻⁸ S/m, 1*10⁻¹⁶ S/m bis 1*10⁻⁸ S/m, 1*10⁻¹⁵ S/m bis 1*10⁻⁸ S/m, 1*10⁻¹³ S/m bis 1*10⁻⁸ S/m, 1*10⁻¹⁰ S/m bis 1*10⁻⁸ S/m sowie 1*10⁻⁹ S/m bis 1*10⁻⁸ S/m, welche insbesondere bei Transformatorenanwendungen wichtig sind. Experimente, deren Resultate in der Figur 4 dargestellt sind, haben ergeben, dass die elektrische Leitfähigkeit in Öl des Isolationselements 1 bei weniger als 12 Gew.-% an Partikeln 3 kaum erhöht ist im Vergleich zum Fall ohne elektrisch leitfähige Partikel 3. Ab einem Gehalt an elektrisch leitfähigen Partikeln 3 von ca. 8 Gew.-% und bis zu einem Gehalt von ca. 18 Gew.-% steigt die elektrische Leitfähigkeit des trockenen und mit Öl imprägnierten Isolationselements 1 von einem Wert im Bereich zwischen 1*10⁻¹⁷ S/m und 1*10⁻¹⁰ S/m bis zu einem Wert im Bereich zwischen 1*10⁻¹⁰ S/m und 1*10⁻⁸ S/m, insbesondere bis zu einem Wert im Bereich zwischen 1*10⁻⁹ S/m - 1*10⁻⁸ S/m, an. Bei einer weiteren Erhöhung der Konzentration an elektrisch leitfähigen Partikeln 3 im Isolationselement 1 auf mindestens 20 Gew.-%, insbesondere auf mindestens auf 24 Gew.-%, bleibt die elektrische Leitfähigkeit des Isolationselements 1 konstant im Bereich zwischen 1*10⁻¹⁰ S/m und 1*10⁻⁸ S/m, insbesondere 1*10⁻⁹ S/m und 1*10⁻⁸ S/m. Die in Figur 4 dargestellten elektrischen Leitfähigkeiten in Öl wurden am Isolationselement 1 gemessen, welches einerseits als Papier und andererseits als Pappe ausgebildet ist. Beim Papier als auch der Pappe wurden die elektrischen Leitfähigkeiten in Öl jeweils gemäss der Norm IEC 60093, 2. Ausgabe, 1.1.1980 sowie bei den Temperaturen von 23 °C sowie 90 °C gemessen. Die Auswertung der Messung erfolgte nach dem sog. Kuechler-Verfahren (A. Kuechler; Hochspannungstechnik Grundlagen - Technologie - Anwendungen; 3te Auflage, 2009, ISBN 978-3-540-78412-8; Kapitel 4.2.2.3).

Der Effekt, dass die Leitfähigkeit durch sehr geringe Partikelmengen kaum beeinflusst wird und erst ab einer gewissen Partikelkonzentration ansteigt, um danach ab einer bestimmten Partikelkonzentration einen ungefähr konstanten Wert anzunehmen, kann insbesondere anhand der Figuren 1 und 2 erklärt werden:
Bei einer sehr geringen Konzentration an elektrisch leitfähigen Partikeln 3 im Isolationselement 1, wie es in der Figur 1 gezeigt ist, sind die Partikel 3 gleichmässig zwischen den einzelnen Chemiefasern 2 eingelagert und berühren sich gegenseitig kaum. Der massgebende Faktor für die elektrische Leitfähigkeit des Isolationselements 1 stellen dann also die Chemiefasern 2 dar, so dass je nach Art der Chemiefasern 2 eine unterschiedliche elektrische Leitfähigkeit gemessen wird. Die elektrische Leitfähigkeit des Isolationselements 1 entspricht somit ungefähr dem Fall eines entsprechenden Isolationselements 1 ohne elektrisch leitfähige Partikel 3.

Ab einer gewissen Konzentration an elektrisch leitfähigen Partikeln 3 von ungefähr 8 Gew.-% beginnen sich die Partikel 3 gegenseitig zu berühren (Figur 2). Die elektrische Leitfähigkeit des Isolationselements 1 wird dadurch zunehmend durch die Partikel 3 bestimmt. Ab einer gewissen Konzentration bilden die Partikel 3 eine Vielzahl von Ketten von sich einander berührenden Partikeln 3, welche sich von der Oberseite des Isolationselements 1 bis zu dessen Unterseite erstrecken. Es findet also ein Perkolationseffekt statt. Eine weitere Erhöhung der Partikelkonzentration führt dann nicht mehr zu einer weiteren Erhöhung der elektrischen Leitfähigkeit des Isolationselements 1, sondern es ist eine Art Sättigungszustand erreicht.

Um mit einer möglichst kleinen Partikelmenge eine für viele Anwendungen erstrebenswerte elektrische Leitfähigkeit des Isolationselements 1 im Bereich zwischen 1*10⁻¹⁷ S/m und 1*10⁻⁸ S/m, insbesondere im Bereich zwischen 1*10⁻¹⁰ S/m und 1*10⁻⁸, insbesondere im Bereich von 1*10⁻⁹ S/m und 1*10⁻⁸, zu erreichen, sollte also eine Partikelkonzentration von 1 Gew.-% bis 30 Gew.-%, bevorzugt 4 Gew.-% bis 30 Gew.-%, bevorzugter 6 Gew.-%, bevorzugter 8 Gew.-% bis 30 Gew.-%, noch bevorzugter 11 Gew.-% bis 30 Gew.-%, noch bevorzugter 12 - 30 Gew.-%, noch bevorzugter 12 - 28 Gew.-%, noch bevorzugter 12 - 26 Gew.-%, am bevorzugtesten 18 Gew.-% bis 26 Gew.-%, gewählt werden.

Überraschenderweise hat sich in den durchgeführten Experimenten zudem gezeigt, dass die elektrische Leitfähigkeit des Isolationselements 1 ab einer Partikelkonzentration von mehr als ca. 12 Gew.-%, insbesondere von mindestens ca. 18 Gew.-%, weitgehend temperaturunabhängig ist. Auch dies kann damit erklärt werden, dass ab dieser Partikelkonzentration hauptsächlich die Partikel 3 und nicht mehr die von der Temperatur stärker beeinflussten Chemiefasern 2 für die elektrische Leitfähigkeit des Isolationselements 1 massgebend sind. Dementsprechend wird die elektrische Leitfähigkeit des Isolationselements 1 ab diesen Partikelkonzentrationen auch weitgehend unabhängig von der Art der verwendeten Chemiefasern 2.

Eine insbesondere bevorzugte Ausführungsform eines Isolationselements 1 weist die folgende Zusammensetzung auf, jeweils bezogen auf das Gesamtgewicht des Isolationselements 1 im Trockenzustand:
- 8-18 Gew.-% Minatec^{®} 51 CM;
- 1-4 Gew.-% kationisches Polymer 4;
- 0.5 - 1 Gew.-% Wasser; und
- 77.0 - 90.5 Gew.-% Chemiefasern 2.

Beim Isolationselement 1 muss es sich zum Beispiel nicht zwingend um einen Bestandteil eines Transformators handeln. Das Isolationselement 1 kann auch zur Isolation von anderen elektrotechnischen Bauelementen, wie beispielsweise Kompensationsdrosseln oder Phasenschieber, verwendet werden. Im Falle eines Transformators muss es sich zudem nicht zwingend um einen ölgefüllten Transformator handeln. Das erfindungsgemässe Isolationselement 1 könnte selbstverständlich beispielsweise auch in gasisolierten Transformatoren eingesetzt werden.

**BEZUGSZEICHENLISTE**

| | | | |
|---|---|---|---|
| 1 | Isolationselement | 5 | Kern |
| 2 | Chemiefasern | 6 | Umhüllung |
| 3 | Elektrisch leitfähige Partikel | 7 | Quarz- oder Talkumpartikel |
| 4 | Kationisches Polymer | | |

## Patentansprüche

1. Isolationselement (1) mit geringer elektrischer Leitfähigkeit zur elektrischen Isolation eines elektrotechnischen Bauelements im Hochspannungsbereich, aufweisend
- Chemiefasern (2) umfassend aus synthetischen Polymeren hergestellte Chemiefasern oder anorganische Chemiefasern ;
- elektrisch leitfähige Partikel (3) mit einem elektrisch nichtleitenden Kern (5) und einer den Kern (5) umgebenden, elektrisch leitfähigen oder halbleitfähigen Umhüllung (6); sowie
- ein kationisches Polymer (4).

2. Isolationselement (1) nach Anspruch 1, wobei das kationische Polymer (4) 0.1 - 15 Gew.-%, bevorzugt 1 - 15 Gew.-%, bevorzugter 2 - 15 Gew.-%, noch bevorzugter 3 - 15 Gew.-%, am bevorzugtesten 4 - 15 Gew.-% bezogen auf das Gesamtgewicht des Isolationselements (1) im Trockenzustand ausmacht.

3. Isolationselement (1) nach Anspruch 1 oder 2, wobei die elektrisch leitfähigen Partikel (3) 1 - 30 Gew.-%, bevorzugt 4 - 30 Gew.-%, bevorzugter 6- 30 Gew.-%, noch bevorzugter 8 - 30 Gew.-%, am bevorzugtesten 12 - 30 Gew.-% bezogen auf das Gesamtgewicht des Isolationselements (1) im Trockenzustand ausmachen.

4. Isolationselement (1) nach einem der vorhergehenden Ansprüche, wobei die Chemiefasern (2) wenigstens 60 Gew.-%, insbesondere wenigstens 80 Gew.-%, bezogen auf das Gesamtgewicht des Isolationselements (1) im Trockenzustand ausmachen.

5. Isolationselement (1) nach einem der vorhergehenden Ansprüche, wobei die Umhüllung (6) der elektrisch leitfähigen Partikel (3) ein Metall enthält.

6. Isolationselement (1) nach Anspruch 5, wobei die Umhüllung (6) ein Metalloxid enthält, welches insbesondere mit einem Fremdatom dotiert ist.

7. Isolationselement (1) nach einem der vorhergehenden Ansprüche, wobei die Grösse der elektrisch leitfähigen Partikel (3) im Bereich von 2 µm bis 200 µm, insbesondere im Bereich von bis 2 µm bis 100 µm, liegt.

8. Isolationselement (1) nach einem der vorhergehenden Ansprüche, wobei der Kern (5) der elektrisch leitfähigen Partikel (3) einen natürlichen oder synthetischen Glimmer aufweist.

9. Isolationselement (1) nach Anspruch 8, wobei es sich bei den elektrisch leitfähigen Partikeln (3) um leitfähige Partikel handelt, die eine Partikelgrösse im Bereich von 2 µm bis 15 µm aufweisen, wobei der Anteil der aus Antimonoxid bestehenden Umhüllungsschicht (6) 38-54 Gew.-% beträgt, und der Anteil des nichtleitenden, aus Glimmer bestehenden Kerns (5) 46-62 Gew.-% beträgt, oder um leitfähige Partikel (3), die eine Partikelgrösse im Bereich von 10 µm bis 60 µm aufweisen, wobei der Anteil der aus Antimonoxid bestehenden Umhüllungsschicht (6) 21-36 Gew.-% beträgt, und der Anteil des nichtleitenden, aus Glimmer bestehenden Kerns (5) 64-79 Gew.-% beträgt.

10. Isolationselement (1) nach einem der vorhergehenden Ansprüche, wobei es sich beim kationischen Polymer (4) um Polyethylenimin oder um kationische Stärke handelt.

11. Isolationselement (1) nach einem der vorhergehenden Ansprüche, wobei es sich bei den Chemiefasern (2) um Para-Aramidfasern handelt.

12. Isolationselement (1) nach einem der vorhergehenden Ansprüche, wobei die Chemiefasern (2) mit Öl, insbesondere Transformatorenöl, imprägniert sind, und wobei das Isolationselement eine elektrische Leitfähigkeit von 1*10⁻¹⁷ S/m bis 1*10⁻⁸ S/m, insbesondere von 1*10⁻¹⁰ S/m bis 1*10⁻⁸ S/m, aufweist.

13. Elektrotechnisches Bauelement für den Hochspannungsbereich, aufweisend ein Isolationselement (1) nach einem der vorhergehenden Ansprüche.

14. Elektrotechnisches Bauelement nach Anspruch 13, wobei es sich beim elektrotechnischen Bauelement um einen Transformator, insbesondere einen HVDC-Stromrichtertransformator, handelt.

15. Verfahren zur Herstellung eines Isolationselements (1) nach einem der Ansprüche 1 bis 12, aufweisend zumindest die folgenden Verfahrensschritte:
- Vermischen von Chemiefasern (2) in Form von Meta-Aramidfasern oder Para-Aramidfasern mit elektrisch leitfähigen Partikeln (3), die einen elektrisch nichtleitenden Kern (5) sowie eine den Kern (5) umgebende, elektrisch leitfähige oder halbleitfähige Umhüllung (6) aufweisen;
- Beimischen eines kationischen Polymers (4) zu den Chemiefasern (2); und
- Entwässern der mit den elektrisch leitfähigen Partikeln (3) und dem kationischen Polymer (4) vermischten Chemiefasern (2).

## Claims

1. An insulation element (1) with low electrical conductivity for the electrical insulation of an electrical engineering component in the high-voltage range, comprising
- chemical fibres (2) comprising chemical fibres made of synthetic polymers or inorganic chemical fibres;
- electrically conductive particles (3) having an electrically non-conductive core (5) and an electrically conductive or semiconductive sheath (6) surrounding the core (5); and
- a cationic polymer (4).

2. The insulation element (1) according to claim 1, wherein the cationic polymer (4) is present in an amount of 0.1 - 15 wt.%, preferably 1 - 15 wt.%, more preferably 2 - 15 wt.%, even more preferably 3 - 15 wt.%, most preferably 4 - 15 wt.%, based on the total weight of the insulation element (1) in the dry state.

3. The insulation element (1) according to claim 1 or 2, wherein the electrically conductive particles (3) constitute 1 - 30 wt.%, preferably 4 - 30 wt.%, more preferably 6 - 30 wt.%, even more preferably 8 - 30 wt.%, most preferably 12 - 30 wt.%, based on the total weight of the insulation element (1) in the dry state.

4. The insulation element (1) according to one of the preceding claims, wherein the chemical fibres (2) constitute at least 60 wt.%, in particular at least 80 wt.%, based on the total weight of the insulation element (1) in the dry state.

5. The insulation element (1) according to one of the preceding claims, wherein the sheath (6) of the electrically conductive particles (3) contains a metal.

6. The insulation element (1) according to claim 5, wherein the sheath (6) contains a metal oxide which is in particular doped with a foreign atom.

7. The insulation element (1) according to one of the preceding claims, wherein the size of the electrically conductive particles (3) is in the range from 2 µm to 200 µm, in particular in the range from 2 µm to 100 µm.

8. The insulation element (1) according to one of the preceding claims, wherein the core (5) of the electrically conductive particles (3) comprises a natural or synthetic mica.

9. The insulation element (1) according to claim 8, wherein the electrically conductive particles (3) are conductive particles which have a particle size in the range from 2 µm to 15 µm, wherein the proportion of the sheath layer (6) consisting of antimony oxide is 38 - 54 wt.% and the proportion of the non-conductive core (5) consisting of mica is 46 - 62 wt.%, or conductive particles (3) which have a particle size in the range from 10 µm to 60 µm, wherein the proportion of the sheath layer (6) consisting of antimony oxide is 21 - 36 wt.%, and the proportion of the non-conductive core (5) consisting of mica is 64 - 79 wt.%.

10. The insulation element (1) according to one of the preceding claims, wherein the cationic polymer (4) is polyethyleneimine or cationic starch.

11. The insulation element (1) according to one of the preceding claims, wherein the chemical fibres (2) are para-aramid fibres.

12. The insulation element (1) according to one of the preceding claims, wherein the chemical fibres (2) are impregnated with oil, in particular transformer oil, and wherein the insulation element comprises an electrical conductivity of 1*10⁻¹⁷ S/m to 1*10⁻⁸ S/m, in particular of 1*10⁻¹⁰ S/m to 1*10⁻⁸ S/m.

13. An electrical engineering component for the high-voltage range, comprising an insulation element (1) according to one of the preceding claims.

14. The electrical engineering component according to claim 13, wherein the electrical engineering component is a transformer, in particular an HVDC converter transformer.

15. A method for producing an insulation element (1) according to one of claims 1 to 12, comprising at least the following method steps:
- mixing chemical fibres (2) in the form of meta-aramid fibres or para-aramid fibres with electrically conductive particles (3) which comprise an electrically non-conductive core (5) and an electrically conductive or semiconductive sheath (6) surrounding the core (5);
- admixing a cationic polymer (4) with the chemical fibres (2); and
- dehydrating the chemical fibres (2) admixed with the electrically conductive particles (3) and the cationic polymer (4).

## Revendications

1. Un élément isolant (1) à faible conductivité électrique pour l'isolation électrique d'un composant électrotechnique dans la gamme haute tension, comprenant
- des fibres chimiques (2) comprenant des fibres chimiques faites à partir de polymères synthétiques ou des fibres chimiques inorganiques ;
- des particules électriquement conductrices (3) ayant un noyau électriquement non conducteur (5) et un revêtement électriquement conducteur ou semi-conducteur (6) entourant le noyau (5) ; ainsi que
- un polymère cationique (4).

2. Un élément isolant (1) selon la revendication 1, dans lequel le polymère cationique (4) contient 0,1 à 15 % en poids, de préférence 1 à 15 % en poids, plus préférablement 2 à 15 % en poids, encore plus préférablement 3 à 15 % en poids, le plus préférablement 4 à 15 % en poids, par rapport au poids total de l'élément isolant (1) à l'état sec.

3. Un élément isolant (1) selon la revendication 1 ou 2, dans lequel les particules électriquement conductrices (3) constituent 1 à 30 % en poids, de préférence 4 à 30 % en poids, plus préférablement 6 à 30 % en poids, encore plus préférablement 8 à 30 % en poids, le plus préférablement 12 à 30 % en poids, par rapport au poids total de l'élément isolant (1) à l'état sec.

4. Un élément d'isolation (1) selon l'une des revendications précédentes, dans lequel les fibres chimiques (2) constituent au moins 60 % en poids, en particulier au moins 80 % en poids, par rapport au poids total de l'élément isolant (1) à l'état sec.

5. Un élément d'isolation (1) selon l'une des revendications précédentes, dans lequel le revêtement (6) des particules électriquement conductrices (3) contient un métal.

6. Un élément isolant (1) selon la revendication 5, dans lequel le revêtement (6) contient un oxyde métallique qui est notamment dopé avec un atome étranger.

7. Un élément isolant (1) selon l'une des revendications précédentes, dans lequel la taille des particules électriquement conductrices (3) est comprise entre 2 µm et 200 µm, en particulier entre 2 µm et 100 µm.

8. Un élément isolant (1) selon l'une des revendications précédentes, dans lequel le noyau (5) des particules électriquement conductrices (3) comprend un mica naturel ou synthétique.

9. Un élément isolant (1) selon la revendication 8, ou les particules électriquement conductrices (3) sont des particules conductrices ayant une taille des particules comprise entre 2 µm et 15 µm, dans lequel la proportion du revêtement constitué d'oxyde d'antimoine (6) se situe dans la plage de 38 à 54% en poids, et la proportion du noyau non conducteur constitué de mica (5) se situe dans la plage de 46 à 62% en poids, ou sont des particules conductrices ayant une taille des particules comprise entre 10 µm et 60 µm, dans lequel la proportion du revêtement constitué d'oxyde d'antimoine (6) se situe dans la plage de 21 à 36% en poids, et la proportion du noyau non conducteur constitué de mica (5) se situe dans la plage de 64 à 79% en poids .

10. Un élément isolant (1) selon l'une des revendications précédentes, dans lequel le polymère cationique (4) est de la polyéthylène imine ou de l'amidon cationique.

11. Un élément isolant (1) selon l'une des revendications précédentes, dans lequel les fibres chimiques (2) sont des fibres para-aramides.

12. Un élément d'isolation (1) selon l'une des revendications précédentes, dans lequel les fibres chimiques (2) sont imprégnées d'huile, en particulier d'huile de transformateur, et dans lesquelles l'élément isolant présente une conductivité électrique de 1*10⁻¹⁷ S/m à 1*10⁻⁸ S/m, en particulier de *10⁻¹⁰ S/m à *10⁻⁸ S/m.

13. Un composant électrique pour le domaine haute tension, comprenant un élément isolant (1) selon l'une des revendications précédentes.

14. Un composant électrique selon la revendication 13, dans lequel le composant électrique est un transformateur, en particulier un transformateur convertisseur HVDC.

15. Un procédé de fabrication d'un élément isolant (1) selon l'une des revendications 1 à 12, comprenant au moins les étapes de procédé suivantes :
- mélanger des fibres chimiques (2) sous forme de fibres de méta-aramides ou para-aramides avec des particules électriquement conductrices (3) qui ont un noyau électriquement non conducteur (5) et un revêtement électriquement conducteur ou semi-conducteur (6) entourant le noyau (5) ;
- ajout d'un polymère cationique (4) aux fibres chimiques (2) ; et
- déshydratation des fibres chimiques (2) mélangées aux particules électriquement conductrices (3) et au polymère cationique (4).
